# EUROPEAN PATENT SPECIFICATION

(11) **EP 3 216 198 B1**
(45) Date of publication and mention of the grant of the patent: **17.07.2019**
(21) Application number: 14795635.3
(22) Date of filing: 07.11.2014
(51) Int. Cl.: H04M 3/22

(54) **IMPROVING VOICE CALL PERFORMANCE TESTING**
VERBESSERUNG DER SPRACHANRUFLEISTUNGSPRÜFUNG
AMÉLIORATION D'UN TEST DES PERFORMANCES D'UN APPEL VOCAL

(43) Date of publication of application: 13.09.2017
(73) Proprietor: Nokia Solutions and Networks Oy, 02610 Espoo (FI)
(72) Inventor: REIJONEN, Antti Johannes, FIN-02200 Espoo (FI); VAITOVIRTA, Hannu Pekka Matias, FIN-02100 Espoo (FI)
(74) Representative: Nokia EPO representatives
(86) International application number: PCT/EP2014/074062
(87) International publication number: WO 2016/070934

(56) References cited:
- EP-A2- 1 267 555
- US-A1- 2005 015 253
- US-A1- 2009 233 595
- US-A1- 2013 143 602

## Description

### TECHNICAL FIELD

The invention relates to communications.

### BACKGROUND

The users of a network may experience voice call quality subjectively. Providing an objective solution for measuring voice call quality may be beneficial in order to manage the network more efficiently.

US 2013/143602 A1 discloses an apparatus caused to receive a first message following conclusion of a voice call between a first apparatus and a second apparatus (over a network. In response to the first message, the apparatus is caused to obtain a geographic location of at least the first apparatus, and prepare a second message for transmission to the first apparatus. The second message includes a telephone number of a quality server to enable the first apparatus to initiate a voice call to participate in a voice quality test with the quality server. The apparatus is then caused to receive the score.

US 2009/0233595 A1 discloses a mobile station (MS) supplying diagnostic test reports in a device management (DM) session to a Device Management Server (DMS). In order for an MS to autonomously initiate any action, the MS must have previously received policy rules from the DMS in its coverage area, and recognize that it is in this known coverage area where system test policy rules should be implemented. The MS will then qualify itself, knowing its presence information. The MS will then estimate the probability that it can successfully implement the diagnostic test and report it to the DMS.

### BRIEF DESCRIPTION

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

### BRIEF DESCRIPTION OF DRAWINGS

In the following embodiments will be described in greater detail with reference to the attached drawings, in which
Figure 1 shows an example a radio system to which embodiments of the invention may be applied;
Figure 2 illustrates a flow diagram of a voice call quality test in the radio system according to an embodiment of the invention;
Figure 3 illustrates a flow diagram of the voice call quality test in the radio system according to an embodiment of the invention;
Figure 4 illustrates the voice call quality test between a network element and at least one terminal device according to an embodiment of the invention;
Figure 5 illustrates an embodiment of the invention;
Figure 6 illustrates a flow diagram of performing the voice call quality test according to an embodiment of the invention;
Figures 7A and 7B illustrate some embodiments of the invention;
Figures 8 and 9 illustrate apparatuses according to some embodiments of the invention; and
Figure 10 illustrates an embodiment of the invention.

### DETAILED DESCRIPTION OF SOME EMBODIMENTS

The following embodiments are exemplary. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Embodiments described may be implemented in a radio system, such as in at least one of the following: Worldwide Interoperability for Micro-wave Access (WiMAX), Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G sys-tem. The present embodiments are not, however, limited to these protocols.

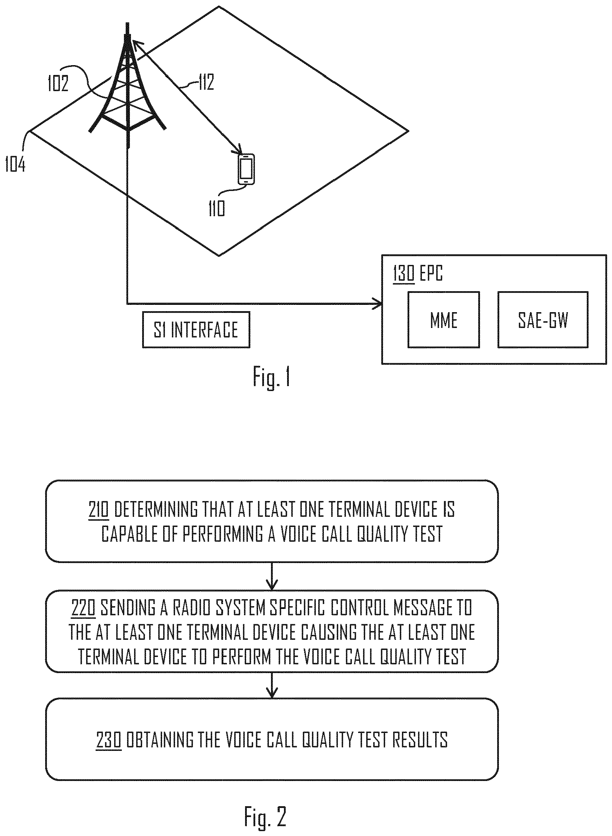

Figure 1 shows an example of a radio system to which embodiments of the invention may be applied. Radio communication networks, such as the Long Term Evolution (LTE) or the LTE-Advanced (LTE-A) of the 3^{rd} Generation Partnership Project (3GPP), are typically composed of at least one network element, such as a network element 102, providing a cell 104. Each cell may be, e.g., a macro cell, a micro cell, or a pico-cell, for example. The network element 102 may be an evolved node B (eNB) as in the LTE and LTE-A, a radio network controller (RNC) as in the UMTS, a base station controller (BSC) as in the GSM/GERAN, or any other apparatus capable of controlling radio communication and managing radio resources within a cell. The network element 102 may be a base station or a small base station, for example. In the case of multiple eNBs in the communication network, the eNBs may be connected to each other with an X2 interface as specified in the LTE. Other communication methods between the network elements may be possible. The network element 102 may be further connected via an S1 interface to an evolved packet core (EPC) 130, more specifically to a mobility management entity (MME) and to a system architecture evolution gateway (SAE-GW). The network element 102 may control a cellular radio communication link 112 established between the network element 102 and at least one terminal device 110 located within or comprised in the cell 104. The communication link 112 may be referred to as conventional communication link for end-to-end communication, where the source device transmits data to the destination device via the network element 102 and/or core network. The network may support time division duplex (TDD) mode of operation.

The at least one terminal device 110 may be simultaneously within multiple cells provided by network elements. The serving network element may be selected by various criteria, such as received power, signal to noise ratio (SNR) and path loss, to name a few. The at least one terminal device 110 may be a terminal device of a cellular communication system, e.g. a computer (PC), a laptop, a palm computer, a mobile phone, a tablet, a phablet or any other user terminal or user equipment capable of communicating with the cellular communication network. In an embodiment, the at least one terminal device 110 is able to communicate with other similar devices via the network element 102. The other devices may be within the cell 104 and/or may be within other cells provided by other network elements. The at least one terminal device 110 may be stationary or on the move. In an embodiment, the at least one terminal device 110 may communicate directly with other terminal devices using, for example, Device-to-Device (D2D) communication.

As described, the at least one terminal device 110 may have a communication link 112 with the network element 102. The communication link 112 may be used to receive, transmit and/or broadcast data and/or control information between the at least one terminal device 110 and the network element 102. For example, the communication link 112 may be used to enable a voice call between the at least one terminal device 110 and another terminal device.

The quality of data transfer within the cell 104 may vary, as the communication link 112 may get worse on the edge areas of the cell 104. Similarly, the communication link 112 may be better when the at least one terminal device 110 is closer to the network element 102. Other factors may have an effect on the quality of data transfer as well. The at least one terminal device 110 may experience interference from other network nodes, such as other terminal devices and/or base stations, wherein the network nodes are transmitting and/or broadcasting at the same time as the data is transferred between the at least one terminal device 110 and the network element 102. Also, there may be shadow areas and/or dead zones within the cell 104, wherein the communication link 112 is not at all usable or is worse than outside the shadow areas. Shadow areas may be caused by natural obstacles, such as hill and/or mountains, and/or man-made structures, such as buildings and/or tunnels, for example.

As the quality of data transfer may vary, the users of the terminal devices may experience quality of service (QoS) that may not be acceptable. However, the QoS experience by different users may be more or less subjective. Furthermore, with current solutions it may be rather difficult to verify that the experienced QoS may not be on an acceptable level using an objective and/or standardized approach. By providing a radio system specific and/or standardized solution for measuring the voice call quality in the radio system may thus be beneficial for the performance of the network.

Figure 2 illustrates a flow diagram of a voice call quality test in the radio system according to an embodiment of the invention. In the invention network element 102 may be able to signal and/or configure the voice call quality test for the at least one terminal device 110 similarly as normal voice bearers may be signaled. The signaling may be, for example, Radio Resource Control (RRC) signaling. Referring to Figure 2, in step 210, the network element 102 may determine that the at least one terminal device 110 is capable of performing a voice call quality test. This may mean receiving capability information from the at least one terminal device 110 and/or performing a query to the at least one terminal device 110, for example. The capability information may be received from another network element, similar to network element 102, also.

In step 220, the network element 102 may send a radio system specific control message to the at least one terminal device 110, wherein the control message causes the at least one terminal device 110 to perform the voice call quality test. The radio system specific control message may mean that the control message is specifically specified to be used with the radio system. For example, the radio system specific control message may be standardized to the radio system. Radio system specific control message may be more efficient than using proprietary control messages, as it may enable the described solution to work with network elements and/or terminal devices provided by different suppliers.

In step 230, the network element 102 may obtain the voice call quality test results. The obtaining may comprise receiving a radio system specific result message from the at least one terminal device 110, wherein the result message comprises the voice call quality test results. The result message may be similarly specified and/or standardized as the control message. The voice call quality test results may comprise measured data and/or analyzed results of the voice call quality test. Thus, the voice call quality test may be analyzed by the network element 102 and/or the at least one terminal device. The voice call quality test may be performed between two terminal devices and/or the at least one terminal device 110 may perform the call to a test server, for example. The voice call may be also performed between the at least one terminal device 110 and the network element 102. Therefore, the results may be obtained by the network element 102 without receiving them from the at least one terminal device. The result message may be transmitted, by the at least one terminal device 110, to another network element, which may be similar to the network element 102.

In an embodiment, the radio system specific control message causes the at least one terminal device 110 to start the voice call quality test.

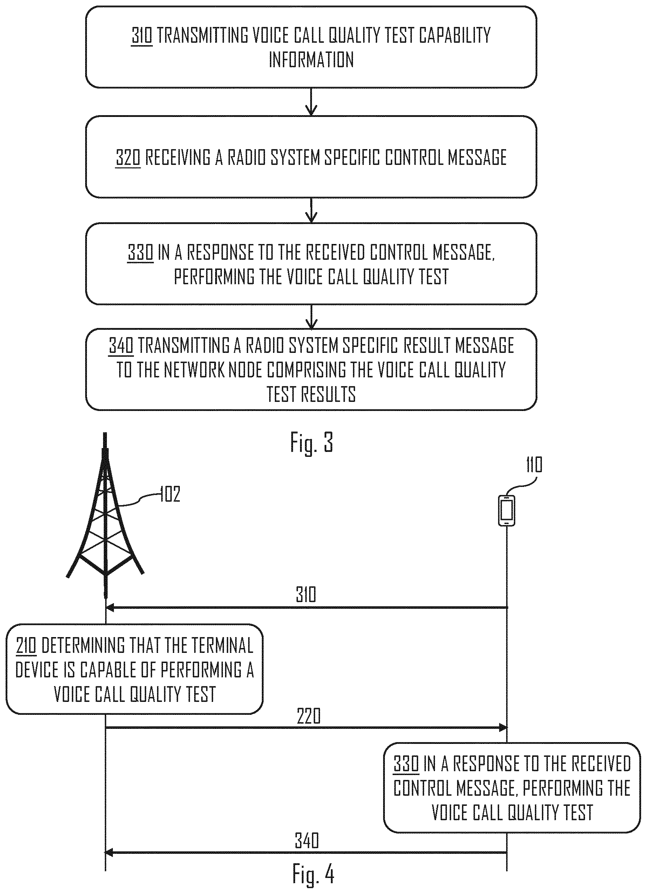

Figure 3 illustrates a flow diagram of the voice call quality test in the radio system according to an embodiment of the invention. Referring to Figure 3, in step 310 the at least one terminal device 110 may transmit voice call quality test capability information. The transmission may be directed to the network element 102, for example. The capability information may provide to the receiver, such as the network element 102, information that the at least one terminal device 110 may be able to perform the voice call quality test. The capability information may further comprise, for example, information about which voice call quality tests the at least one terminal device 110 may be able to perform. In such a case, there may be a number of tests which may be performed by the at least one terminal device 110.

In step 320, the at least one terminal device 110 may receive a radio system specific control message from the network element 102 requesting the at least one terminal device 110 to perform the voice call quality test. As a response to the received control message, the at least one terminal device 110 may perform the voice call quality test, as requested by the control message (block 330).

In step 340, the at least one terminal device 110 may transmit a radio system specific result message to the network element 102, wherein the result message comprises the results of the voice call quality test performed in step 330. The result message may comprise the voice call quality test results, terminal device power control specific path loss, terminal device Signal-to-Interference (SIR) average, SIR minimum and SIR maximum.

In an embodiment, the terminal device 110 informs in the radio system specific result message to the network element 102 that the voice call quality test has been canceled and/or not been able to start. The result message may comprise the reason why the voice call quality test may not have been performed. The reason for not performing the voice call quality test may be, for example, low battery on the at least one terminal device 110 and/or terminal specific option that needs to be enabled by the user in order to perform the test by the at least one terminal device 110.

In an embodiment, the radio system specific control message is and/or comprises RrcConnectionReconfigurationComplete message. The radio system specific control message may be the RrcConnectionReconfigurationComplete message.

Using the described solution for voice call quality test may generate certain benefits. First, the voice call quality test may be tested in different parts in the network. Second, the voice call quality test may be standardized, which may bring more reliable results. Third, the voice call quality test may be controlled via RRC signaling, which may reduce the complexity of remote control and allow easier collection of results. Fourth, mobile vendor may test usability and voice quality for a new terminal device model voice call quality test. Fifth, the network vendor may test Inter Radio Access Technology (RAT) voice call and/or IP voice calls in a high loaded network. Inter RAT voice call may be a call which is performed in multiple RATs via mobility events, such as handovers and/or fall-backs. This may mean that a user is moving from one RAT to another RAT and/or is in the region of multiple RATs. Sixth, the operators may evaluate new phone models and new voice related features.

Using the described solution for voice call quality test may further bring benefits for different use cases. First, when a user or a subscriber of the at least one terminal device calls operator customer service center and complaints about poor throughput, voice quality and/or breaking calls, the operator may run a set of standardized test models, such as the voice call quality test described in this application, for the at least one terminal device 110 for verifying the signal conditions, as well as network and the at least one terminal device 110 performance. With standardized test models the operator may be able to quickly rule out higher level root causes related to a problem in the at least one terminal device 110, network and/or signal conditions, without a need for sending anyone to the location.

Second, if the network element 102 suspects suboptimal power control Radio Network (RNW) parameter for the at least one terminal device 110 and/or a group of terminal devices, the network element 102 may run the voice call quality tests and/or voice call test models with different power control parameters. Own and neighbor cell user plane (UP) and control plane (CP) Key Performance Indicators (KPI) may be compared for analyzing the optimal power control results. The test models may be run in a live network with test terminal devices, without a need for reconfiguring the cells.

Third, if it is expected that there are problems in the at least one terminal device 110 capability in handling either LTE path loss measurement, WCDMA Signal-to-Interference Ratio (SIR) target and/or power control algorithm, different terminal device models may be compared in the field for power control results, when the used traffic type is standardized and when in the terminal device reports both path loss and SIR target are measured.

Fourth, different traffic models, such as the voice call quality test, may also help in ruling out problems, which are related to specific idle and/or active periods between allocated data and control channels. The network element 102 power control algorithms may be highly depending on how often certain channels are scheduled.

Fifth, the voice call quality test may be expanded to live network level, instead of running them only at single network element 102 in laboratory environment

Sixth, the at least one terminal device 110 may not need a personal computer (PC) for generating traffic for the voice call quality test, which may make the test set-up simpler and/or cheaper, at least in a case, wherein the voice call quality test may be terminated inside the at least one terminal device 110. Thus, the traffic generation and/or voice samples may be created and/or stored inside the at least one terminal device 110.

Seventh, terminal devices may be easier to install into different locations, if they don't need controlling PC. For example, the operator may make a deal with a local taxi company and/or share test terminal devices among its employers to be carried or kept at home, for getting needed geographical test terminal device coverage. The only thing needed may be a small charger, and the terminal device may be able to run the test models continuously.

Eight, voice call quality test may be setup in network element 102 test dedicated state, thus enabling easier combined laboratory testing with the terminal device 110 and the network element 102.

Ninth, laboratory test set-ups may come cheaper and more simper, if Core Network and/or Core Network simulator is not needed. Commercial call generators may further be very expensive.

Tenth, benchmarking different terminal device models power control accuracy and UP performance may be enabled, if tests are performed in a controlled laboratory environment

Eleventh, the power control parameters may be visible in L3 signaling, and thus the results may be collected in automated way over whole network either as performance measurement counters or by tracing L3 signaling

Let us now look closer on the embodiments of the invention. Figure 4 illustrates the voice call quality test between the network element 102 and the at least one terminal device 110 according to an embodiment of the invention. Referring to Figure 4, in step 310, the at least one terminal device 110 may transmit the voice call quality test capability information to the network element 102, as described above. The network element 102 may receive the voice call quality test capability information from the at least one terminal device 110. In step 210, the network element 102 may determine, based at least partially on the received voice call quality test capability information, that the at least one terminal device 110 is capable of performing the voice call quality test. The network element 102 may store and/or maintain the capability information of the at least one terminal device 110. The network element 102 may further share the capability information with other network elements, such as eNBs via X2 interface, for example. Thus, the capability information of the at least one terminal device 110 may be received from other network elements.

In an embodiment, the at least one terminal device 110 reports voice call quality test capabilities in terminal device radio capability parameters. Based on the radio capability information, the test model may be started for a selected set of terminal devices by the network element 102.

In an embodiment, the network element 102 determines that the voice call quality test is required for the at least one terminal device 110. The determination may be performed before and/or after the determination that the at least one terminal device 110 may be able to perform the voice call quality test. The determination may be initiated and/or requested, for example, by a network operator operating the network. For example, a user of a terminal device 110 in the network may experience QoS that may not be on an acceptable level. The user may inform a network service center that the QoS is in bad. The network operator may confirm that the QoS is not on an acceptable level by requesting the voice call quality test for the terminal device 110 and/or some other similar terminal device that may be assumed to be in similar conditions in regards to perceived QoS. Thus, an objective approach to the voice call quality test may enhance the operation of the network by quickly determining the real problems.

Still referring to Figure 4, in step 220, the network element 102 may send the radio system specific control message to the at least one terminal device 110, wherein the control message causes the at least one terminal device 110 to start the voice call quality test, as described in relation to Figure 2. The sending of the step 220 may be performed as a response to the determination that the voice call quality test is required for the at least one terminal device 110.

The at least one terminal device 110 may receive the radio system specific control message, as shown in step 320 of Figure 3. In step 330, the received control message may cause the at least one terminal device 110 to start and/or perform the voice call quality test.

In an embodiment, the at least one terminal device 110 comprises a voice codec. The voice codec may be and/or comprise a hardware voice codec and/or a software voice codec. The voice codec may be configured to perform the voice call quality test. Thus, the voice call quality test may be performed by software and/or hardware.

In an embodiment, the at least one terminal device 110 comprises a voice call quality tester plugin configured to perform the voice call quality test, wherein the voice call quality tester plugin is connected to the at least one terminal device 110 by a communication link. The communication link may be provided by a wireless connection, such as Bluetooth, Near Field Communication (NFC) or WiFi to name a few. The communication link may also be wired connection utilizing, for example, Universal Serial Bus (USB) connection. The communication link may enable data to be exchanged between the tester plugin and the at least one terminal device 110.

In an embodiment, the voice call quality tester plugin may comprise and/or be an external voice Mean Opinion Score (MOS) tester, wherein the external voice MOS tester may be configured to perform a MOS test, as described later. The external voice MOS tester may be a separate network element and/or comprised in the separate network element. The external voice MOS tester may be connected to the at least one terminal device 110, wherein the connection may enable data exchange between the testes and the at least one terminal device 110. The external voice MOS tester may be controlled, by the network element 102 and/or the at least one terminal device 110, using RRC signaling, for example. Other type of signaling may also be used. The external voice MOS tester may play and analyze wanted different standardized sample files, such as voice sample files. Further, the external voice MOS tester may change the position of the speaker and microphone in relation to the at least one terminal device 110. The at least one terminal device 110 may perform the voice call quality test with the help of the external voice MOS tester.

In an embodiment, the performing of the voice call quality test comprises playing voice sample files, wherein the voice sample files are stored in the at least one terminal device 110 and/or the network element 102 signals the sample files to the at least one terminal device 110 and/or to the external voice call quality tester. The voice sample files may comprise voice samples with different gender and nationality, thus increasing the coverage of the voice call quality test.

In an embodiment, the voice call quality tester plugin is physically coupled with the at least one terminal device 110. The tester plugin may be connected to the at least one terminal device's 110 USB port and/or some other port. The at least one terminal device 110 and the tester plugin may be detachably coupled with the at least one terminal device 110.

In an embodiment, the received radio system specific control message causes the at least one terminal device to perform one of the following: performing the voice call quality test by the voice codec installed to the at least one terminal device, wherein the voice coded is at least one of the following: the hardware voice codec and the software voice codec, or performing the voice call quality test by the voice call quality tester plugin, wherein the voice call quality tester plugin is connected to the at least one terminal device by a communication link.

The mentioned voice call quality tester plugin may comprise at least one of the following: a microphone, a speaker, a USB port and a USB cable for communicating with the at least one terminal device 110 and/or charging the battery of the said plugin. Still referring to Figure 4, in step 340 the at least one terminal device 110 may transmit the radio system specific result message to the network element 102, wherein the result message may comprise the results of the voice call quality test. As described above, the results may comprise the raw data of the test and/or the actual voice call quality test results. The raw data may be used by the network element 102 to calculate and/or determine the results of the voice call quality test. If the actual voice call quality test results are sent, the calculation and/or determination may be done by the at least one terminal device 110. The network element 102 may receive the results from the at least one terminal device 110.

The voice call quality test results may further comprise meta data of the test, such as timestamps and/or the counterpart of the voice call test, for example. This may be beneficial in a case, wherein the control message causes the at least one terminal device 110 to choose the counterpart of the voice call.

In an embodiment, the radio system specific control message comprises a first radio resource control signal and the radio system specific result message comprises a second radio resource control signal, and wherein the first and second radio resource control signals are standardized radio resource control signals of the radio system. This may mean that the first and second radio resource control signals utilize RRC signaling in a LTE and/or LTE-A radio system. Similar standardized signaling may be used in other radio systems too. If RRC signaling is used, a new L3 parameter may be needed.

The first radio resource control signal may comprise and/or be a S1 Application Protocol (S1AP) message and/or some other Radio Access Technology (RAT) Cyclic Prefix (CP) protocol message. The network element 102 may request paging for starting the voice call quality test for selected set of terminal devices, wherein the identity of the terminal devices may be based on International Mobile Subscriber Identity (IMSI) and/or special subscriber profile notification flag, for example. Thus, the voice call quality test may be requested to start at the right terminal devices. The request for starting the voice call quality test may be done from core network.

In the said special subscriber notification flag, different user profiles may be marked in L3 signaling, such as VIP subscribers, test terminal devices, friendly users and demo terminal devices. Benefits for using the special subscriber notification flag may be that no IMSI and/or International Mobile Equipment Identity (IMEI) is needed for detecting proper terminals for running voice performance tests. Thus, the subscriber integrity may not be risked and the results may be analyzed directly from the network element 102. This may be beneficial compared to IMSI, wherein IMSI may not be visible in Radio Access Networks. When calls are marked, the network element 102 may use information in its radio resource management algorithms for providing better service for VIP subscribers and/or for testing different algorithms for friendly users and/or tests. In case of the voice call quality and/or performance test, it may comprise an indication flag that it is possible to start voice call quality test for badly behaving terminal devices, without complaints from end users of the terminal devices, in case the indication flag indicates a friendly user. Or try different call processing algorithms in parallel the same cell for getting immediate comparable results for the best performing algorithm.

The core network and/or the network element 102 may page the terminal devices with correct criteria in case they are under same tracking area and/or service area, and inform in the paging request that it is related to the voice call quality test. The terminal devices may add a new cause value to the RrcConnectionRequest message, indicating that the call is related to a voice call quality test. Therefore, the receiver of the call may know that the call is related to a test. RrcConnectionRequest may be used to request RRC connection in the LTE and/or LTE-A systems. It may be noted that in other radio systems similar value may be used.

In an embodiment, the network element 102 sends a request to the core network, wherein the request causes the core network to perform the steps according to Figure 2. The actual steps of Figure 2 may be performed by other network element, for example. The result of the voice call quality test may be transmitted back to the network element 102 by the core network and/or the other network element.

In an embodiment, the network element 102 may page the at least one terminal device 110 in order to start the voice call quality test. After the paging has been done successfully, the network element 102 may route the established connection to another terminal device and/or test server that may be located within the cell 104, provided by the network element 102. Thus, the actual voice call is performed between, for example, two terminal devices, but the calling to both terminal devices is done by the network element 102. Similarly, in the previous embodiment the core network may route the calls to other terminal devices and/or test servers. In such a case, the counterparts of the voice call quality test may be located in cells provided by other network elements.

In an embodiment, the network element 102 determines that the at least one terminal device 110 is capable of performing a voice call quality test, sends the radio system specific control message to the at least one terminal device 110, wherein the control message causes the at least one terminal device 110 to perform the voice call quality test, wherein the performing the voice call quality test is performed between the network element 102 and the at least one terminal device 110. Thus, the network element 102 may act as a counterpart for the voice call, and thus it may obtain the results of the voice call quality test without receiving them from the at least one terminal device 110.

In an embodiment, the at least one terminal device 110 comprises a group of terminal devices. The network element 102 may form groups of the terminal devices comprising similar characteristics. For example, terminal devices from a certain network area may be grouped, and the request for the voice call quality test may be transmitted to the group. In an embodiment, the network element may broadcast the said request to the group.

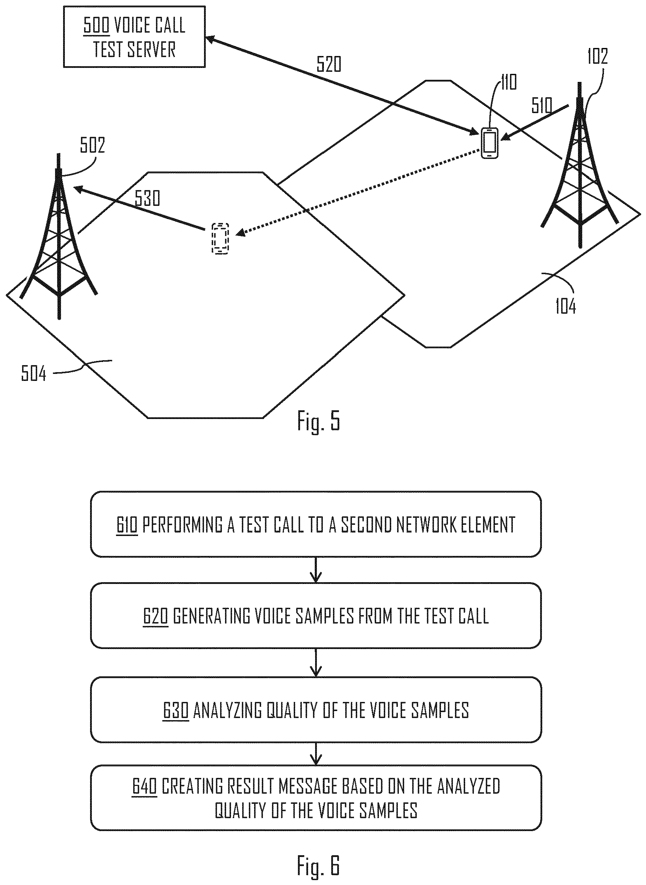

Figure 5 illustrates an embodiment of the invention. Referring to Figure 5, the network element 102 may transmit 510 the radio system specific control message to the at least one terminal device 110. As the at least one terminal device 110 may comprise the voice codec and/or voice call quality tester plugin, the control message may comprise information about should the voice codec and/or tester plugin be used for the voice call quality test. The control message may cause the at least one terminal device to use at least one of the following for the voice call quality test: the voice codec and the voice call quality tester plugin.

The control message may cause the at least one terminal device 110 to start the voice call 520 to a voice call test server 500. Similarly, the voice call 520 may be performed to another terminal device, as described earlier. Also, as described above, the voice calls may be started by the network element to the at least one terminal device 110 and to the test server 500, and these calls may be connected, thus creating the voice call 520. This may be beneficial if the amount of control signalling is needed to be limited, as the voice call test server 500 may be comprised in the network element 102, for example.

In an embodiment, the voice call test server 500 is a MOS test server 500. The MOS test server 500 may act as a counterpart for the MOS measurement of a voice call.

In an embodiment, the network element 102 comprises the voice call test server. In an embodiment, the at least one terminal device 110 comprises and/or is the voice call test server 500.

The at least one terminal device 110 may be on the move during the voice call quality test. Therefore, it may be possible that the voice call quality test is finished within a second cell 504 provided by a second network element 502. The results of the voice call quality test may be transmitted 530 to the second network element 502. Furthermore, the results may be transmitted to the network element 102 by the second network element 502. In an embodiment, the result message is transmitted to the second network element 502, wherein the result message causes the second network element 502 to transmit the said result message to the network element 102. Transmission between the network elements 502, 102 may be enabled by, for example, X2 interface.

In an embodiment, the radio system specific control message comprises RrcConnectionReconfiguration message, wherein the RrcConnectionReconfiguration may configure the voice call quality test, and cause at least one terminal device 110 to perform the voice call quality test.

In an embodiment, the network element 102 may transmit the radio system specific control message to the at least one terminal device 110, wherein the said control message may comprise information about the voice call quality test's used voice sample file, voice sample generator, receiver usage and/or voice call quality test duration. The control message may also comprise voice call receiver's IP address in a case the voice call test server 500 is used. Furthermore, in a case where the receiver is a terminal device, Mobile Station International Subscriber Directory Number (MSISDN) /IMSI number may be comprised in the control message. The described information may be comprised in the RrcConnectionReconfiguration part, for example.

Network element 102 or other network element shall decide according to higher level configuration the test model source and target destinations, e.g. the test model is configured between data call test model server.

In an embodiment, the network element transmits a second radio system specific control message, wherein the said second control message causes the at least one terminal device 110 to stop and/or terminate the voice call quality test. The at least one terminal device 110 may receive the said second control message and stop the voice call quality test. The at least one terminal device 110 may then send the radio system specific result message to the network element 102.

In an embodiment, , the network element 102 informs in Hand Over (HO) signaling to the second network element 502, which is the target network element, that handed over bearer is related to the voice call quality test. Thus, the second network element 502 may determine that the current voice call is related to the voice call quality test. The described scenario may be related to a mobility event, wherein the at least one terminal device 110 is performing the voice call quality test and moves from the cell 104 to the second cell 504.

Figure 6 illustrates a flow diagram of performing the voice call quality test according to an embodiment of the invention. Referring to Figure 6, the performing the voice call quality test, by the at least one terminal device 110, may comprise performing a test call to a second network element (step 610). The second network element may be a second terminal device, a third terminal device comprising a second voice call quality tester plugin and/or a voice call test server 500. In step 620, the at least one terminal device 110 may generate voice samples from the test call. In step 630, the quality of the voice samples may be analyzed. The result message may be created based on the analyzed quality of the voice samples (step 640). The result message may be further sent to the network element 102.

In an embodiment, the analyzing quality of the voice samples comprises measuring a mean opinion score (MOS) for at least one voice sample of the voice samples. The MOS may be a numeric quality scale from 1 to 5, wherein 1 may be the worst result and 5 may be the best result. The at least one terminal device 110 and/or the network element may provide a MOS value to the voice samples, and thus an overall MOS value may be created from the voice call. The overall voice call MOS value may be used to determine, by the network element 102 and/or the network operator, is the voice call QoS on an acceptable level.

The measuring of MOS may be made so that the measurement results reflect subjective tests, wherein a number of listeners and/or terminal device users rate heard audio quality of test sentences read aloud by both male and female speakers over the communications medium being tested. Further, different languages may be used as voice samples. The listeners may give each sentence a rating using the following rating scheme:
a) 5 Excellent Imperceptible,
b) 4 Good Perceptible but not annoying,
c) 3 Fair Slightly annoying,
d) 2 Poor Annoying, and
e) 1 Bad Very annoying.

The results of the user rating may be used to provide the voice call quality test an objective rating that may be based on a subjective average user.

In an embodiment, the radio system specific result message comprises the MOS measurement result. Thus, the said result message may comprise a number from 1 to 5. The number may be comprised in the RrcConnectionReconfigurationComplete message. In an embodiment, the voice call quality test is or comprises the MOS measurements. The voice call may be evaluated on the MOS scale, and the result message may comprise the MOS value of the voice call. The result message may comprise a plurality of MOS values for different time spans of the voice call.

In an embodiment, the voice call quality test is run both parallel to an existing call/bearers and/or new call/bearers.

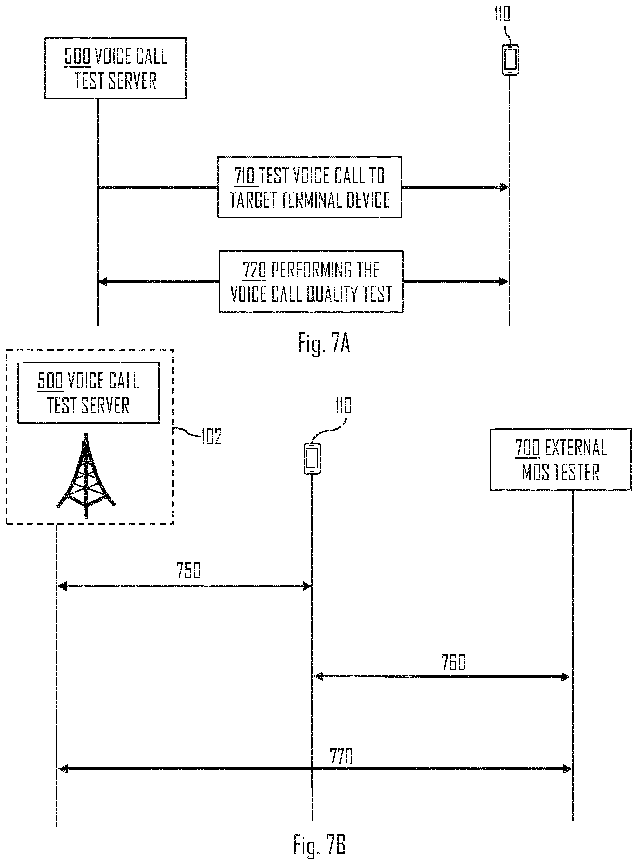

Figure 7A illustrates an embodiment of the invention. Referring to Figure 7, the voice call test server 500 may configure voice call quality test by starting a voice call with the target terminal device, in this case the at least one terminal device 110 (block 710). The voice call test server 500 may be comprised in the network element 102.

In block 720, the voice call quality test may be performed between the at least one terminal device 110 and the test server 500. Thus, voice call test server 500 may initiate the test and act as the counterpart for the at least one terminal device 110.

In an embodiment, the test is configured by the network element 102. The at least one terminal device 110 may comprise the voice call test server 500, and thus the voice call quality test may be performed between the network element 102 and the voice call test server 500.

In an embodiment, the network element 102 starts the test voice call with the at least one terminal device 110. The network element 102 may then route the call to the voice call test server 500. Therefore, the voice call quality test may be performed between the at least one terminal device 110 and the voice call test server 500.

In an embodiment, the voice call quality test is a voice call performance test.

Figure 7B illustrates an embodiment of the invention. Referring to Figure 7B, an arrow 750 illustrates a scenario where the voice call quality test performed between the voice call test server 500 and the at least one terminal device 110. The voice call test server 500 may reside in the backhaul of the network element 102 and/or be comprised in the network element 102. Thus, the network element 102 may act as a test server itself. Therefore, the test server 500 may be used in one side and the at least one terminal device may be used in other side in the voice call quality test for analyzing MOS results and/or generating voice samples.

In another scenario, shown with an arrow 760, the at least one terminal device 110 may be used in one side and an external MOS tester 700 may be used in other side in the voice call quality test for analyzing MOS results and/or generating voice samples. Thus, the voice call quality test may be performed between the at least one terminal device 110 and the external MOS tester 700. The external MOS tester 700 may be and/or be comprised in the external voice MOS tester described earlier. The external MOS tester 700 may be attached to the at least one terminal device 110 and/or to another terminal device, wherein the attaching may enable communication between them.

In another scenario, shown with an arrow 770, the external MOS tester 700 may be used in one side and the voice call test server 500 may be used in other side in the voice call quality test for analyzing MOS results and/or generating voice samples. Thus, the voice call quality test may be performed between the voice call test server 500 and the external MOS tester 700.

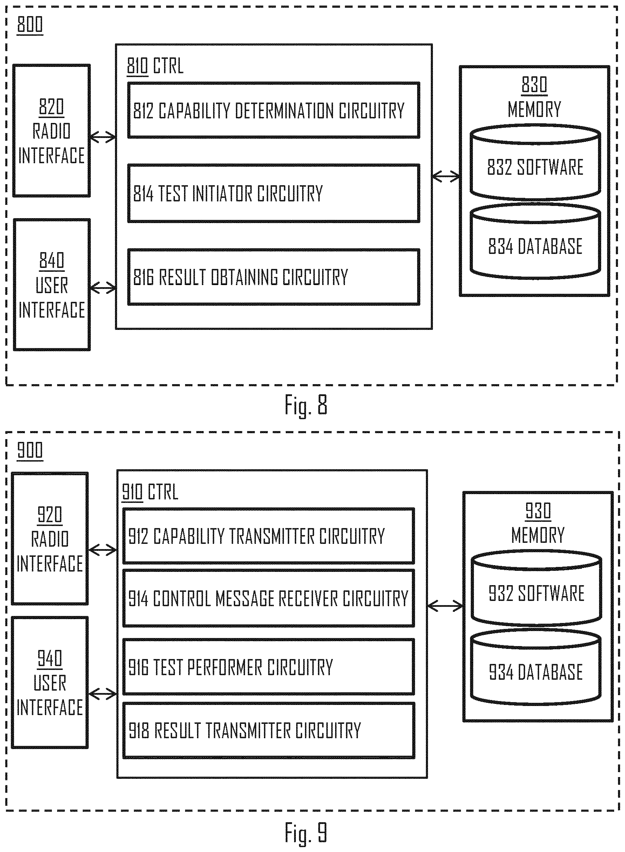

Figures 8 to 9 provide apparatuses 800, 900 comprising a control circuitry (CTRL) 810, 910, such as at least one processor, and at least one memory 830, 930 including a computer program code (software) 832, 932, wherein the at least one memory and the computer program code (software) 832, 932, are configured, with the at least one processor, to cause the respective apparatus 800, 900 to carry out any one of the embodiments of Figures 1 to 7B, or operations thereof.

In an embodiment, these operations may comprise tasks, such as, determining, by a network element, that at least one terminal device is capable of performing a voice call quality test, sending a radio system specific control message to the at least one terminal device, wherein the control message causes the at least one terminal device to perform the voice call quality test, and obtaining the voice call quality test results.

In an embodiment, these operations may comprise tasks, such as, transmitting, by a radio apparatus, voice call quality test capability information, receiving a radio system specific control message from a network element; as a response to the received control message, performing the voice call quality test, and transmitting a radio system specific result message to the network element, wherein the result message comprises the results of the voice call quality test.

Referring to Figure 8, the memory 830 may be implemented using any suitable data storage technology, such as semiconductor based memory devices, flash memory, magnetic memory devices and systems, optical memory devices and systems, fixed memory and removable memory. The memory 830 may comprise a database 834 for storing data, such as voice call quality test data for specific terminal devices.

The apparatus 800 may further comprise radio interface (TRX) 820 comprising hardware and/or software for realizing communication connectivity according to one or more communication protocols. The TRX may provide the apparatus with communication capabilities to access the radio access network and enable communication between network nodes, for example. The TRX may comprise the above-mentioned X2 interface. The TRX may comprise standard well-known components such as an amplifier, filter, frequency-converter, (de)modulator, and encoder/decoder circuitries and one or more antennas.

The apparatus 800 may also comprise user interface 840 comprising, for example, at least one keypad, a microphone, a touch display, a display, a speaker, etc. Each user interface may be used to control the respective apparatus by the user.

In an embodiment, the apparatus 800 may be or be comprised in a base station (also called a base transceiver station, a Node B, a radio network controller, or an evolved Node B, for example). In an embodiment, the apparatus 800 is or is comprised in the network element 102. In an embodiment, the apparatus 800 comprises the voice call test server 500.

The control circuitry 810 may comprise a capability determination circuitry 812 configure to determine that at least one terminal device 110 is capable of performing a voice call quality test. The control circuitry 810 may comprise a test initiator circuitry 814 configured to send a radio system specific control message to the at least one terminal device 110, wherein the control message causes the at least one terminal device 110 to perform the voice call quality test. The control circuitry 810 may further comprise a result obtaining circuitry 816 configured to obtain the results of the voice call quality test. For example, the obtaining may comprise receiving a radio system specific result message from the at least one terminal device 110, wherein the result message comprises the voice call quality test results.

Referring to Figure 9, the memory 930 may be implemented using any suitable data storage technology, such as semiconductor based memory devices, flash memory, magnetic memory devices and systems, optical memory devices and systems, fixed memory and removable memory. The memory 930 may comprise a database 934 for storing data.

The apparatus 900 may further comprise radio interface (TRX) 920 comprising hardware and/or software for realizing communication connectivity according to one or more communication protocols. The TRX may provide the apparatus with communication capabilities to access the radio access network and enable communication between network nodes, for example. The TRX may comprise standard well-known components such as an amplifier, filter, frequency-converter, (de)modulator, and encoder/decoder circuitries and one or more antennas.

The apparatus 900 may also comprise user interface 940 comprising, for example, at least one keypad, a microphone, a touch display, a display, a speaker, etc. Each user interface may be used to control the respective apparatus by the user.

In an embodiment, the apparatus 900 is or is comprised in the at least one terminal device 110. In an embodiment, the apparatus is or is comprised in the external voice MOS tester. In an embodiment, the apparatus 900 comprises the voice call test server 500. In an embodiment, the apparatus 900 comprises the external MOS tester 700.

The control circuitry 910 may comprise a capability transmitter circuitry 912 configured to transmit voice call quality test capability information.
The control circuitry may comprise a control message receiver circuitry 914 configured to receive a radio system specific control message from a network element 102. As a response to the received control message, a test performer circuitry 916 may perform the voice call quality test. The test performer circuitry 916 may be comprised in the control circuitry 910. The control circuitry 910 may further comprise a result transmitter circuitry 918 configured to transmit a radio system specific result message to the network element 102, wherein the result message comprises the results of the voice call quality test.

The test performer circuitry 916 may comprise at least one of the following: a software codec and a hardware codec. Both of these codecs may be configured to perform the voice call quality test.

The apparatus 900 may further comprise a voice call quality tester plugin configured to perform the voice call quality test, wherein the voice call quality tester plugin may be connected to the apparatus 900 by a communication link. The voice call quality tester plugin may be physically coupled with the apparatus 900.

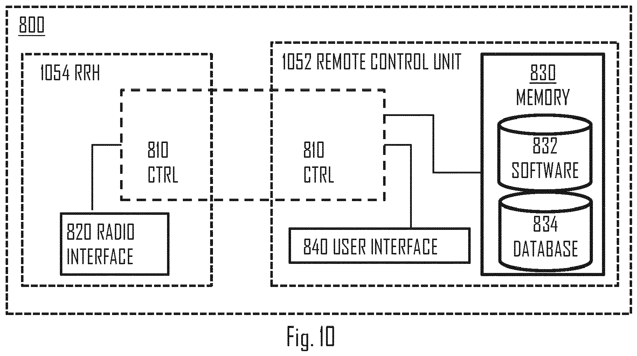

In an embodiment, as shown in Figure 10, at least some of the functionalities of the apparatus 800 may be shared between two physically separate devices, forming one operational entity. Therefore, the apparatus 800 may be seen to depict the operational entity comprising one or more physically separate devices for executing at least some of the described processes. Thus, the apparatus 800 of Figure 10, utilizing such shared architecture, may comprise a remote control unit (RCU) 1052, such as a host computer or a server computer, operatively coupled (e.g. via a wireless or wired network) to a remote radio head (RRH) 1054 located in the base station. In an embodiment, at least some of the described processes may be performed by the RCU 1052. In an embodiment, the execution of at least some of the described processes may be shared among the RRH 954 and the RCU 1052.

In an embodiment, the RCU 1052 may generate a virtual network through which the RCU 1052 communicates with the RRH 1054. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer (i.e. to the RCU). External network virtualization is targeted to optimized network sharing. Another category is internal virtual networking which provides network-like functionality to the software containers on a single system. Virtual networking may also be used for testing the terminal device.

In an embodiment, the virtual network may provide flexible distribution of operations between the RRH and the RCU. In practice, any digital signal processing task may be performed in either the RRH or the RCU and the boundary where the responsibility is shifted between the RRH and the RCU may be selected according to implementation.

As used in this application, the term 'circuitry' refers to all of the following: (a) hardware-only circuit implementations, such as implementations in only analog and/or digital circuitry, and (b) combinations of circuits and soft-ware (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with Figures 1 to 7B may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of Figures 1 to 7B or operations thereof. In an embodiment, these operations may comprise tasks, such as, determining, by a network element, that at least one terminal device is capable of performing a voice call quality test, sending a radio system specific control message to the at least one terminal device, wherein the control message causes the at least one terminal device to perform the voice call quality test, and obtaining the voice call quality test results. In an embodiment, these operations may comprise tasks, such as, transmitting, by a radio apparatus, voice call quality test capability information, receiving a radio system specific control message from a network element; as a response to the received control message, performing the voice call quality test, and transmitting a radio system specific result message to the network element, wherein the result message comprises the results of the voice call quality test.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of Figures 1 to 7B, or operations thereof. In an embodiment, these operations may comprise tasks, such as, determining, by a network element, that at least one terminal device is capable of performing a voice call quality test, sending a radio system specific control message to the at least one terminal device, wherein the control message causes the at least one terminal device to perform the voice call quality test, and obtaining the voice call quality test results. In an embodiment, these operations may comprise tasks, such as, transmitting, by a radio apparatus, voice call quality test capability information, receiving a radio system specific control message from a network element; as a response to the received control message, performing the voice call quality test, and transmitting a radio system specific result message to the network element, wherein the result message comprises the results of the voice call quality test.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with Figures 1 to 7B may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. A method by a network element in a radio system, the method comprising:
sending (220) a radio system specific control message to at least one terminal device, wherein the control message causes the at least one terminal device to perform a voice call quality test; and
obtaining (230) the voice call quality test results;
**characterized in that** the method further comprises:
prior to the sending of the radio system specific control message, determining (210), that the at least one terminal device is capable of performing a voice call quality test, by receiving capability information from the at least one terminal device or another network element.

2. The method of claim 1, wherein the obtaining (230) comprises:
receiving a radio system specific result message from the at least one terminal device, wherein the result message comprises the voice call quality test results.

3. The method of any preceding claim, wherein the control message comprises a first radio resource control signal and the result message comprises a second radio resource control signal, and wherein the first and second radio resource control signals are standardized radio resource control signals of the radio system.

4. The method of any preceding claim, further comprising:
determining that the voice call quality test is required for the at least one terminal device; and
as a response to the said determining, sending the control message to the at least one terminal device, wherein the control message causes the at least one terminal device to start the voice call quality test.

5. The method of any preceding claim, wherein the at least one terminal device comprises a group of terminal devices.

6. The method of any preceding claim, wherein the control message further causes the at least one terminal device to perform one of the following:
performing the voice call quality test by a voice codec installed to the at least one terminal device, wherein the voice coded is at least one of the following: hardware voice codec and software voice codec; or
performing the voice call quality test by a voice call quality tester plugin, wherein the voice call quality tester plugin is connected to the at least one terminal device by a communication link.

7. The method of any preceding claim, wherein performing the voice call quality test causes the at least one terminal device to perform the following steps:
performing a test call to a second network element;
generating voice samples from the test call;
analyzing quality of the voice samples; and
creating the result message based on the analyzed quality of the voice samples.

8. The method of claim 7, wherein performing the voice call quality test further causes the at least one terminal device to perform the following steps:
transmitting the result message to the network element.

9. The method of any of claims 7 to 8, wherein the analyzing quality of the voice samples comprises measuring a mean opinion score for at least one voice sample of the voice samples.

10. The method of any of claims 7 to 9, wherein the second network element is at least one of the following:
a second terminal device;
a third terminal device comprising a second voice call quality tester plugin; and
a voice call quality test server.

11. A network element (800) comprising:
at least one processor (810) and at least one memory (830) including a computer program code, wherein the at least one memory (830) and the computer program code (832) are configured, with the at least one processor (810), to cause the network element to perform operations comprising:
sending a radio system specific control message to at least one terminal device, wherein the control message causes the at least one terminal device to perform a voice call quality test; and
obtaining the voice call quality test results;
**characterized in that** at least one memory (830) and the computer program code (832) are configured, with the at least one processor (810), to further cause the network element to perform operations comprising:
prior to the sending of the radio system specific control message, determining, that the at least one terminal device is capable of performing a voice call quality test, by receiving capability information from the at least one terminal device or another network element.

## Patentansprüche

1. Verfahren durch ein Netzwerkelement in einem Funksystem, wobei das Verfahren umfasst:
Senden (220) einer funksystemspezifischen Steuernachricht an mindestens ein Endgerät, wobei die Steuernachricht das mindestens eine Endgerät veranlasst, eine Sprachanruf-Qualitätsprüfung durchzuführen; und
Erhalten (230) der Sprachanruf-Qualitätsprüfungsergebnisse;
**dadurch gekennzeichnet, dass** das Verfahren ferner umfasst:
vor dem Senden der funksystemspezifischen Steuernachricht, Bestimmen (210), dass das mindestens eine Endgerät in der Lage ist, eine Sprachanruf-Qualitätsprüfung durchzuführen, durch Empfangen von Fähigkeitsinformationen von dem mindestens einen Endgerät oder einem anderen Netzwerkelement.

2. Verfahren nach Anspruch 1, wobei das Erhalten (230) umfasst:
Empfangen einer funksystemspezifischen Ergebnisnachricht von dem mindestens einen Endgerät, wobei die Ergebnisnachricht die Sprachanruf-Qualitätsprüfungsergebnisse umfasst.

3. Verfahren nach einem der vorhergehenden Ansprüche, wobei die Steuernachricht ein erstes Funkressourcensteuersignal und die Ergebnisnachricht ein zweites Funkressourcensteuersignal umfasst und wobei das erste und das zweite Funkressourcensteuersignal standardisierte Funkressourcensteuersignale des Funksystems sind.

4. Verfahren nach einem der vorhergehenden Ansprüche, ferner umfassend: Bestimmen, dass die Sprachanruf-Qualitätsprüfung für das mindestens eine Endgerät erforderlich ist; und
als Reaktion auf das Bestimmen, Senden der Steuernachricht an das mindestens eine Endgerät, wobei die Steuernachricht bewirkt, dass das mindestens eine Endgerät die Sprachanruf-Qualitätsprüfung startet.

5. Verfahren nach einem der vorhergehenden Ansprüche, wobei das mindestens eine Endgerät eine Gruppe von Endgeräten umfasst.

6. Verfahren nach einem der vorhergehenden Ansprüche, wobei die Steuernachricht ferner bewirkt, dass das mindestens eine Endgerät einen der folgenden Schritte ausführt: Durchführen der Sprachanruf-Qualitätsprüfung durch einen auf dem mindestens einen Endgerät installierten Sprachcodec, wobei die Sprachcodec ein Hardware-Sprachcodec und/oder ein Software-Sprachcodec ist; oder
Durchführen der Sprachanruf-Qualitätsprüfung durch ein Sprachanrufqualitätsprüfungs-Plugin, wobei das Sprachanruf-Qualitätsprüfungs-Plugin über eine Kommunikationsverbindung mit dem mindestens einen Endgerät verbunden ist.

7. Verfahren nach einem der vorhergehenden Ansprüche, wobei das Durchführen der Sprachanruf-Qualitätsprüfung bewirkt, dass das mindestens eine Endgerät die folgenden Schritte durchführt:
Durchführen eines Prüfanrufs an ein zweites Netzwerkelement;
Erzeugen von Sprachproben von dem Prüfanruf; Analysieren der Qualität der Sprachproben; und
Erstellen der Ergebnisnachricht basierend auf der analysierten Qualität der Sprachproben.

8. Verfahren nach Anspruch 7, wobei das Durchführen der Sprachanruf-Qualitätsprüfung bewirkt, dass das mindestens eine Endgerät die folgenden Schritte durchführt:
Übertragen der Ergebnisnachricht an das Netzwerkelement.

9. Verfahren nach einem der Ansprüche 7 bis 8, wobei das Analysieren der Qualität der Sprachproben das Messen einer mittleren Meinungsbewertung für mindestens eine Sprachprobe der Sprachproben umfasst.

10. Verfahren nach einem der Ansprüche 7 bis 9, wobei das zweite Netzwerkelement
ein zweites Endgerät; und/oder
ein drittes Endgerät, das ein zweites Sprachanruf-Qualitätsprüfungs-Plugin umfasst; und/oder ein Sprachanruf-Qualitätsprüfungsserver ist.

11. Netzwerkelement (800), umfassend:
mindestens einen Prozessor (810) und mindestens einen Speicher (830), der einen Computerprogrammcode beinhaltet, wobei der mindestens eine Speicher (830) und der Computerprogrammcode (832) mit dem mindestens einen Prozessor (810) zum Veranlassen des Netzwerkelements zum Durchführen von Operationen ausgelegt sind, die umfassen:
Senden einer funksystemspezifischen Steuernachricht an mindestens ein Endgerät, wobei die Steuernachricht das mindestens eine Endgerät veranlasst, eine Sprachanruf-Qualitätsprüfung durchzuführen; und
Erhalten der Sprachanruf-Qualitätsprüfungsergebnisse;
**dadurch gekennzeichnet, dass** mindestens ein Speicher (830) und der Computerprogrammcode (832) mit dem mindestens einen Prozessor (810) so ausgelegt sind, dass das Netzwerkelement ferner veranlasst wird, Operationen durchzuführen, die umfassen:
vor dem Senden der funksystemspezifischen Steuernachricht, Bestimmen, dass das mindestens eine Endgerät in der Lage ist, eine Sprachanruf-Qualitätsprüfung durchzuführen, durch Empfangen von Fähigkeitsinformationen von dem mindestens einen Endgerät oder einem anderen Netzwerkelement.

## Revendications

1. Procédé au moyen d'un élément de réseau dans un système radio, le procédé comprenant :
l'envoi (220) d'un message de commande spécifique à un système radio à au moins un dispositif terminal, dans lequel le message de commande contraint le ou les dispositifs terminaux à effectuer un test de qualité d'appel vocal ; et
l'obtention (230) des résultats de test de qualité d'appel vocal ;
**caractérisé en ce que** le procédé comprend en outre :
avant l'envoi du message de commande spécifique à un système radio, la détermination (210) du fait que le ou les dispositifs terminaux peuvent effectuer un test de qualité d'appel vocal en recevant des informations de capacité en provenance du ou des dispositifs terminaux ou d'un autre élément de réseau.

2. Procédé selon la revendication 1, dans lequel l'obtention (230) comprend :
la réception d'un message de résultat spécifique à un système radio en provenance du ou des dispositifs terminaux, dans lequel le message de résultat comprend les résultats de test de qualité d'appel vocal.

3. Procédé selon l'une quelconque des revendications précédentes, dans lequel le message de commande comprend un premier signal de commande de ressources radio et le message de résultat comprend un second signal de commande de ressources radio et dans lequel les premier et second signaux de commande de ressources radio sont des signaux de commande de ressources radio standardisés du système radio.

4. Procédé selon l'une quelconque des revendications précédentes, comprenant en outre :
la détermination que le test de qualité d'appel vocal est nécessaire pour le ou les dispositifs terminaux ; et
à la suite de ladite détermination, l'envoi du message de commande au ou aux dispositifs terminaux, dans lequel le message de commande contraint le ou les dispositifs terminaux à commencer le test de qualité d'appel vocal.

5. Procédé selon l'une quelconque des revendications précédentes, dans lequel le ou les dispositifs terminaux comprennent un groupe de dispositifs terminaux.

6. Procédé selon l'une quelconque des revendications précédentes, dans lequel le message de commande contraint en outre le ou les dispositifs terminaux à effectuer l'une des réalisations suivantes :
la réalisation du test de qualité d'appel vocal par un codec vocal installé dans le ou les dispositifs terminaux, dans lequel le codec vocal est : un codec vocal de matériau et/ou un codec vocal de logiciel ; ou
la réalisation du test de qualité d'appel vocal par un plugiciel de testeur de qualité d'appel vocal, dans lequel le plugiciel de testeur de qualité d'appel vocal est raccordé au ou aux dispositifs terminaux par une liaison de communication.

7. Procédé selon l'une quelconque des revendications précédentes, dans lequel la réalisation du test de qualité d'appel vocal contraint le ou les dispositifs terminaux à réaliser les étapes suivantes :
la réalisation d'un appel d'essai à un second élément de réseau ;
la génération d'échantillons vocaux à partir de l'appel d'essai ;
l'analyse de la qualité des échantillons vocaux ; et
la création du message de résultat en se basant sur la qualité analysée des échantillons vocaux.

8. Procédé selon la revendication 7, dans lequel la réalisation du test de qualité d'appel vocal contraint en outre le ou les dispositifs terminaux à réaliser les étapes suivantes :
la transmission du message de résultat à l'élément de réseau.

9. Procédé selon l'une quelconque des revendications 7 et 8, dans lequel l'analyse de la qualité des échantillons vocaux comprend la mesure d'une note moyenne d'opinion pour au moins un échantillon vocal des échantillons vocaux.

10. Procédé selon l'une quelconque des revendications 7 à 9, dans lequel le second élément de réseau est au moins l'un des éléments suivants :
un deuxième dispositif terminal ;
un troisième dispositif terminal comprenant un second plugiciel de testeur de qualité d'appel vocal ; et
un serveur de test de qualité d'appel vocal.

11. Élément de réseau (800) comprenant :
au moins un processeur (810) et au moins une mémoire (830) comprenant un code de programme d'ordinateur, dans lequel la ou les mémoires (830) et le code de programme d'ordinateur (832) sont configurés, avec le ou les processeurs (810), pour contraindre l'élément de réseau à effectuer des opérations comprenant :
l'envoi d'un message de commande spécifique à un système radio à au moins un dispositif terminal, dans lequel le message de commande contraint le ou les dispositifs terminaux à effectuer un test de qualité d'appel vocal ; et
l'obtention des résultats de test de qualité d'appel vocal ;
**caractérisé en ce qu'**au moins une mémoire (830) et le code de programme d'ordinateur (832) sont configurés, avec le ou les processeurs (810) pour contraindre en outre l'élément de réseau à effectuer des opérations comprenant :
avant l'envoi du message de commande spécifique à un système radio, la détermination que le ou les dispositifs terminaux peuvent effectuer un test de qualité d'appel vocal en recevant des informations de capacité en provenance du ou des dispositifs terminaux ou d'un autre élément de réseau.
